# EUROPÄISCHE PATENTSCHRIFT

(11) **EP 0 502 335 B1**
(45) Veröffentlichungstag und Bekanntmachung des Hinweises auf die Patenterteilung: **21.12.1994**
(21) Anmeldenummer: 92102138.2
(22) Anmeldetag: 08.02.1992
(51) Int. Cl.: B60T 8/64, B60T 8/84

(54) **Antiblockierregelsystem**
Anti-lock braking system
Système de freinage anti-blocage

(30) Priorität: 07.03.1991 DE 4107278
(43) Veröffentlichungstag der Anmeldung: 09.09.1992
(73) Patentinhaber: ROBERT BOSCH GMBH, 70442 Stuttgart (DE)
(72) Erfinder: Fuchs, Steffen, Dipl.-Ing., W-7101 Untergruppenbach (DE); Meier, Thomas, Dipl.-Ing., W-7149 Freiberg am Neckar (DE)

(56) Entgegenhaltungen:
- DE-A- 2 610 585
- DE-A- 3 505 268

## Beschreibung

### Stand der Technik

Ein Antiblockierregelsystem mit den Merkmalen des Oberbegriffs des Anspruchs 1 ist z.B. aus Bosch Technische Berichte, Band 7 (1980), Heft 2, Seite 86 und 87 Bild 35 und Bild 40, bekannt.

### Vorteile der Erfindung

Der Vorteil der Erfindung liegt darin, daß das Fahrzeug bei einseitigem µ-Sprung und zwar von hohem µ auf niedriges µ infolge des diagonalen Druckabbaus weniger stark um die Hochachse giert. Weiterhin werden kürzere Bremswege erreicht. Der Individualregelung an den Vorderrädern kann auch noch eine Giermomentenaufbauverzögerung überlagert sein, die bekanntlich den Druckaufbau am High-Rad bei einer Druckregelung am Low-Rad verzögert, um ein sich schnell aufbauendes Giermoment zu vermeiden.

### Figurenbeschreibung

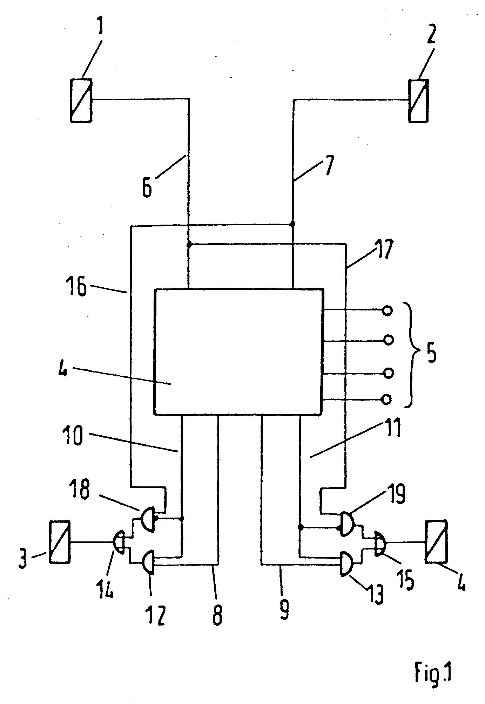

Anhand der Fig. 1 der Zeichnung wird ein Ausführungsbeispiel der Erfindung näher erläutert In der Fig. 1 sind den Vorderrädern zugeordnete 3/3-Magnetventile mit 1 und 2 und den Hinterrädern zugeordnete 3/3-Magnetventile mit 3 und 4 bezeichnet. Ein Steuergerät trägt das Bezugszeichen 4. Ihm werden über Klemmen 5 die Signale von nicht dargestellten, den vier Rädern zugeordneten Geschwindigkeitssensoren zugeführt. Sie leitet daraus Bremsdrucksteuersignale zur Druckabsenkung, Druckkonstanthaltung und zur Druckerhöhung ab, die zur Individualregelung des Bremsdruck an den einzelnen Rädern über Leitungen 6, 7, 8 und 9 den 3/3-Ventilen 1 bis 4 zugeführt werden.

Die für die Regelung des Bremsdrucks an den Hinterrädern zuständigen Baugruppen des Steuergerätes geben über Leitungen 10 und 11 ein Signal ab, wenn und solange die Regelung an dem zugehörigen Rad wirksam ist. Spricht somit für eines der Hinterräder die Regelung an, so erscheint auf einer der Leitungen 10 oder 11 ein Signal, das ein zugehöriges Und-Gatter 12 oder 13 für die Bremsdrucksteuersignale auf der Leitung 8 oder 9 aus dem Steuergerät 4 durchlässig macht, so daß eine Ansteuerung des Ventils 3 oder 4 über ein Oder-Gatter 14 oder 15 möglich wird. Das Ventil 3 ist über eine Leitung 16, ein Und-Gatter 18 und das Oder-Gatter 14 mit der Ansteuerleitung 7 verbunden. Eine entsprechende Verbindung besteht zwischen der Ansteuerleitung 6 und dem Ventil 4 über eine Leitung 17, ein Und-Gatter 19 und das Oder-Gatter 15. Wenn die Individualregelung an einem der Hinterräder läuft, ist das entsprechende Und-Gatter 18 bzw. 19 gesperrt (invertierter Eingang) und die Verbindung der Leitung 6 zum Ventil 4 bzw. Leitung 7 zum Ventil 3 unterbrochen. Es erfolgt die Individualregelung am entsprechenden Hinterad. Läuft jedoch keine Individualregelung am Hinterrad und es beginnt eine Individualregelung am diagonal liegenden Vorderrad, so wird auch das zugehörige Hinterrad im Gleichklang damit geregelt.

## Patentansprüche

1. Antiblockierregelsystem für ein Vierradfahrzeug, bei dem die Bremsdrücke an den einzelnen Radbremsen bei Auftreten von Instabilitäten an den entsprechenden Rädern individuell geregelt werden, dadurch gekennzeichnet, daß bei Ansprechen der Regelung an einem Vorderrad der Bremsdruck des diagonal gegenüberliegenden Hinterrads nach Maßgabe der Ansteuersignale des zugehörigen Vorderrads geregelt wird, solange an dem Hinterrad keine Instabilität auftritt.

2. Antiblockierregelsystem nach Anspruch 1, dadurch gekennzeichnet, daß der Individualregelung an den Bremsen der Vorderräder eine Giermomentenaufbauverzögerung überlagert ist.

## Claims

1. Antilock control system for a four-wheel vehicle, in which the braking pressures at the individual wheel brakes are controlled individually when instabilities occur at the corresponding wheels, characterized in that, when the control responds at a front wheel, the braking pressure of the diagonally opposite rear wheel is controlled in accordance with the triggering signals of the associated front wheel as long as no instability occurs at the rear wheel.

2. Antilock control system according to Claim 1, characterized in that a yawing moment build-up delay is superimposed on the individual control at the brakes of the front wheels.

## Revendications

1. Système de freinage anti-blocage pour un véhicule à quatre roues dont les pressions de frein au niveau des différents freins de roue sont régulées individuellement lorsque des instabilités naissent au niveau des roues correspondantes, système caractérisé en ce que lors de la mise en oeuvre de la régulation sur une roue avant, la pression de frein de la roue arrière opposée en diagonale est régulée en fonction des signaux de commande de la roue avant correspondante, aussi longtemps qu'il n'y a pas d'instabilité au niveau de cette roue arrière.

2. Système de régulation anti-blocage selon la revendication 1, caractérisé en ce que la régulation individuelle au niveau des freins des roues avant est combinée à une temporisation de l'établissement du couple de giration.
